# EUROPEAN PATENT APPLICATION

(11) **EP 3 907 881 A1**
(43) Date of publication of application: **10.11.2021**
(21) Application number: 19907928.6
(22) Date of filing: 21.11.2019
(51) Int. Cl.: H02S 20/30, F21V 21/38, F21W 131/103

(54) **SMART SOLAR POWER GENERATION SYSTEM**

(30) Priority: 31.12.2018 KR 20180173998
(71) Applicant: Reel Tech Co., Ltd., Jeollanam-do 58009 (KR)
(72) Inventor: SHIN, Jeong Hoon, Suncheon-si, Jeollanam-do 57930 (KR)
(74) Representative: Habermann, Hruschka & Schnabel
(86) International application number: PCT/KR2019/016028
(87) International publication number: WO 2020/141725

(57) **Abstract**

Disclosed is a smart solar power generation system comprising: a pole fixed to stand on the ground; a solar panel disposed obliquely on the top of the pole and generating solar electricity; a rotation device installed under the solar panel and providing rotational force to the solar panel; and a microcomputer which drives and controls the rotation device, and executes a first rotation mode for producing solar electricity while rotating the solar panel at a predetermined speed after sunrise, and a second rotation mode for moving the solar panel to the start position by rotating the solar panel such that the top surface of the solar panel faces east using residual electricity outputted from the solar panel at sunset or sunrise.

## Description

### TECHNICAL FIELD

This application claims priority based on Korean Patent Application No. 10-2018-0173998 filed on December 31, 2018, and all contents disclosed in the specification and drawings of the application are included in this application.

The present invention relates to a solar power generation system, and more particularly, to a smart solar power generation system having a structure capable of constructing a facility of solar power generation with high efficiency of power generation while minimizing environmental destruction.

### BACKGROUND ART

Generally, a solar power generation system is constructed in the form of a complex, as a plurality of solar panels is aggregated on a site such as a forestland, a fallow land, a building roof, a reservoir, a salt farm or the like.

When the solar power generation site is a forestland, a farmland or the like, frame structures and solar panels should be installed after a rearrangement work on the site is completed by performing a logging or civil engineering work, and therefore, an environmental destruction problem of damaging the trees and soil on a large scale inevitably occurs. Due to these side effects, it is not easy in reality to use a forestland or the like as a solar power generation site although it satisfies the conditions of location required for solar power generation.

Korean Laid-opened Patent Publication No. 2011-0024887 discloses a self-loading type solar power generation device that can be installed on a place such as a rooftop of a building or a bank in a non-destructive manner. The self-loading type solar power generation device includes a pillar assembly formed by successively connecting one or more pillars, and a light collecting plate coupled on the top of the pillar assembly, and the pillars are provided with an inclined surface on the top surface and a filler accommodation space for accommodating a filler material inside thereof.

Korean Laid-opened Patent Publication No. 2016-0086729 relates to a method of installing a solar module without occupying farmlands, and discloses a solar module and a method thereof, in which the solar module is installed in a farmland provided with a lower support, an installation fixing frame, and a support frame to easily install the solar module on the farmland during an off-farming season after harvest is over. In addition, Korean Laid-opened Patent Publication No. 2016-0086729 discloses a solar module having a structure, in which a plurality of easy-to-install solar modules is provided to be stacked by connecting an installation fixing frame of an easy-to-install solar module to one side of a protection frame of another easy-to-install solar module using a hinge means so that the solar modules may be spread and installed when they are used.

However, since an area occupied by the frame structures that support solar panels is large, the conventional solar power generation system still has the problem of seriously damaging the nature during the construction, and therefore, an alternative thereto is required.

In addition, the conventional solar power generation system has a disadvantage of low efficiency of solar power generation since a solar panel is usually fixedly installed. Although a system for moving the solar panel by tracking movement of the sun for the purpose of solar power generation has been disclosed, there is a problem in that it is not easy to construct the system as the devices are complicated and expensive.

Meanwhile, CCTV cameras and lighting lamps may be preferably added and combined with the solar power generation system. However, due to the nature of CCTV cameras and lighting lamps of being installed in a high place, there is a problem of deteriorating the functions by accumulation of dust or changes of external environments such as wind or the like when they are used for a long period of time. In addition, when the CCTV cameras or the lighting lamps are to be repaired or cleaned, it needs to rent and use expensive equipment such as high place ladder trucks, cargo cranes or the like, and thus the maintenance cost is high, and the traffic can be obstructed as the equipment occupies driveways.

When a pedestrian or the like approaches the CCTV camera's monitoring area at night, the CCTV cameras and the lighting facilities perform an operation of capturing the subject as the lighting lamps are automatically turned on and the CCTV cameras operate at the same time as the pedestrian is detected by detection sensors installed in the CCTV cameras.

However, when the pedestrian goes out of the detection range of the detection sensors and moves to the opposite side of the utility pole, there occurs a problem with the lighting lamps and the cameras not working properly as the pedestrian is covered by the utility pole itself and approach of the pedestrian is not detected by the detection sensors, and therefore, a countermeasure thereof is required.

### DISCLOSURE OF INVENTION

### TECHNICAL GOALS

Therefore, the present invention has been made in view of the above problems, and it is an object of the present invention to provide a smart solar power generation system, which can improve efficiency of solar power generation by rotating a solar panel at a predetermined speed using a simple driving device.

Another object of the present invention is to provide a smart solar power generation system having a structure capable of adjusting a solar panel to a correct position in the east using residual electricity output from the solar panel after sunset.

Still another object of the present invention is to provide a smart solar power generation system, which can be supplied with solar power as a power for CCTV cameras and lighting lamps, and conveniently perform cleaning or maintenance works by selectively raising or lowering the CCTV cameras and the lighting lamps.

Still another object of the present invention is to provide a smart solar power generation system, which can control operation of CCTV cameras and lighting units by detecting approach of a pedestrian without an error.

### TECHNICAL SOLUTION

To accomplish the above objects, according to one aspect of the present invention, there is provided a smart solar power generation system comprising: a pole fixed to be erected on the ground; a solar panel disposed obliquely on the top of the pole to generate solar electricity; a rotating device installed under the solar panel to provide rotational force to the solar panel; and a microcomputer for driving and controlling the rotating device, and performing a first rotation mode of generating solar electricity while rotating the solar panel at a predetermined speed after sunrise, and a second rotation mode of moving the solar panel to a rotation start position by rotating the solar panel so that the top surface of the solar panel faces east using residual electricity output from the solar panel at sunset or sunrise.

The rotating device may include: a first tubular body connected on the bottom of the solar panel, a second tubular body fixed to the top of the pole, a rotating gear connected to the first tubular body, a fixed gear connected to the second tubular body, a driving motor installed on the fixed gear to provide rotational force to the rotating gear, a rotation count plate disposed under the rotating gear to have an uneven pattern formed in a circumferential direction at regular intervals, and a limit switch fixed to the fixed gear to maintain contact with the rotation count plate when the rotating gear rotates.

It is preferable that a first contact point and a second contact point continuously contacting with each other when the rotating gear rotates to transfer power or signals are installed at a contact unit between the first tubular body and the second tubular body, and the microcomputer rotates the solar panel in only one direction when the first rotation mode and the second rotation mode are performed.

An electric wire for transferring power or signals may be connected between the first tubular body and the second tubular body.

The microcomputer may drive and detect rotation of the solar panel in steps from an operation of the limit switch turned on/off according to the uneven pattern of the rotation count plate.

The microcomputer may set the number of rotation steps to be different for each season, and perform rotation control by setting the number of rotation steps to be largest in summer and smallest in winter among four seasons.

A base plate having a predetermined angle according to the latitude of an installation area may be inserted between the solar panel and the rotating device to adjust an inclination angle.

The microcomputer may perform rotation control through an illuminance sensor, a seasonal rotation set time, and a satellite communication module.

The smart solar power generation system of the present invention may further comprise a main controller communicating with the microcomputer in a wired and wireless manner to manage different solar panels and rotating devices in an integrated manner and control all solar panels to rotate equally.

The main controller may perform control of cleaning the solar panel by detecting wind direction when it rains and rotating the solar panel in a direction facing raindrops.

Preferably, the smart solar power generation system may further comprise: a plurality of support members positioned under the solar panel, connected to the pole, and branched in several directions; a plurality of bodies installed to correspond to the plurality of support members, each having a drum for winding a traveling cable thereon and a driving motor for providing rotational force to the drum; and a plurality of highly-installed devices respectively corresponding to the plurality of bodies and installed to be raised or lowered while hanging on the traveling cables, wherein the plurality of highly-installed devices may be controlled to be raised or lowered individually or as a group.

The plurality of highly-installed devices may include: an elevating lighting module installed on at least any one among the plurality of support members and provided with a first body having a drum for winding a first traveling cable thereon and a driving motor for providing rotational force to the drum, and a lighting unit installed to provide lighting around the pole while hanging on the first traveling cable to be raised or lowered; and an elevating camera module installed on at least another one among the plurality of support members and provided with a second body having a drum for winding a second traveling cable thereon and a driving motor for providing rotational force to the drum, and a CCTV camera installed to be raised or lowered while hanging on the second traveling cable.

The smart solar power generation system of the present invention may further comprise: a detection sensor installed on the outer surface of the pole or to be spaced apart from the pole by a predetermined distance to detect approach of a pedestrian; and a lighting control unit for selectively turning on the lighting unit when a detection signal is output from the detection sensor.

In addition, the smart solar power generation system of the present invention may further comprise a circular seat member disposed around the pole in a circular shape at a predetermined height from the bottom of the pole to provide a seat surface for users to sit on.

The lighting control unit may automatically turn on the lighting unit when user's seating on the circular seat member is detected.

The lighting control unit and lighting control units installed in the neighboring poles communicate with each other so that adjacent lighting units may be sequentially turned on.

The lighting control unit may automatically output a warning sound, a warning message, or music when approach of a pedestrian is detected.

When approach of a pedestrian is detected, the lighting control unit may communicate with lighting control units installed in the neighboring poles to track movement of the pedestrian and control operation of the CCTV camera or the lighting unit.

It is preferable that the elevating camera module and the elevating lighting module receive emergency power from the solar panel.

The support members may be arranged in three directions at regular intervals therebetween, and the elevating lighting module may be installed on a support member located in the middle among the three support members, and one elevating camera module may be installed on each of the remaining support members.

A CCTV monitor showing images captured by the CCTV camera may be installed on the pole or the support member.

### ADVANTAGEOUS EFFECTS

The smart solar power generation system according to the present invention has following effects.

- As the solar panel is placed at a rotation start point in advance using residual electricity generated by the solar panel before and after sunset, solar power generation may be performed at a correct position after sunrise the next day.

- As rotation steps are set to be different for each season to rotate the solar panel at a rotation angle corresponding to the amount of sunlight, the amount of solar power generation can be efficiently increased without using an expensive solar tracking device.

- As the return on investment is fast since a rotating device can be miniaturized and its configuration is simple, the problems of frequent failure and high price, which are disadvantages of an existing solar tracking device, can be solved.

- As a weight block is installed to be locally buried for each pole, a large-scale civil work can be omitted. Therefore, it is possible to have a wide range of choice for a solar power generation site, such as a place around a factory, a residential area, a place around a park or the like.

- As the solar panel is sufficiently separated from the ground and wind passes well due to the nature of the solar panel being supported by a pole, the efficiency of solar power generation can be improved by suppressing rise of temperature of the solar panel.

- As the efficiency of solar power generation is improved by rotating the solar panel at a predetermined speed, the problem of decreasing the amount of power generation, which occurs as the solar panels are not densely populated, can be compensated.

- As the rotating device is configured to include a bearing and a tubular body and stably rotates the solar panel installed on the pole without shaking, solar power generation may be performed with high efficiency.

- As elevating camera modules and elevating lighting modules arranged on the pole can be raised or lowered individually or collectively using traveling cables, works such as cleaning and maintenance of equipment can be conveniently performed.

- As operation of CCTV cameras and lighting units can be controlled by detecting approach of a pedestrian, unlike existing facilities in which a detection sensor is installed in the camera itself, a pedestrian detection blind spot does not occur.

- As the lighting unit is automatically turned on when approach of a pedestrian is detected, clear CCTV image quality can be secured.

- As the CCTV may continuously operate without power disconnection by using solar power in the event of power failure, it may contribute to prevention of crimes.

### BRIEF DESCRIPTION OF THE DRAWINGS

FIG. 1 is a front view showing the appearance of a smart solar power generation system according to a preferred embodiment of the present invention.
FIG. 2 is a side view of FIG. 1.
FIG. 3 is a block diagram showing the functional configuration of a smart solar power generation system according to a preferred embodiment of the present invention.
FIG. 4 is a partial cross-sectional view showing the configuration of the rotating device in FIG. 2.
FIG. 5 is a partially enlarged cross-sectional view of FIG. 4.
FIG. 6 is a cross-sectional view showing a modified example of FIG. 4.
FIG. 7 is a perspective view showing the appearance of a rotation count plate and a limit switch provided in the rotating device in FIG. 4.
FIG. 8 is a perspective view showing the appearance of a smart solar power generation system according to another embodiment of the present invention.
FIG. 9 is a front view of FIG. 8.
FIG. 10 is a side view of FIG. 8.
FIG. 11 is a perspective view showing a state of lowering the CCTV camera and the lighting unit hanging on the traveling cables in FIG. 8, respectively.
FIG. 12 is a cross-sectional view showing the arrangement structure of the solar panel in FIG. 8.
FIG. 13 is a view showing an example of using a smart solar power generation system according to a preferred embodiment of the present invention.
FIG. 14 is a perspective view showing the appearance of a smart solar power generation system according to another embodiment of the present invention.
FIG. 15 is a front view of FIG. 14.
FIG. 16 is a cross-sectional view showing a fixing structure of the circular seat member in FIG. 14.
FIG. 17 is a perspective view showing a state of lowering the CCTV camera and the lighting unit hanging on the traveling cables in FIG. 14, respectively.
FIG. 18 is a perspective view showing an installation example of a CCTV monitor provided in a smart solar power generation system according to the present invention.
FIG. 19 is a side view showing an example of arranging detection sensors around the outer surface of a pole.

### BEST MODE FOR CARRYING OUT THE INVENTION

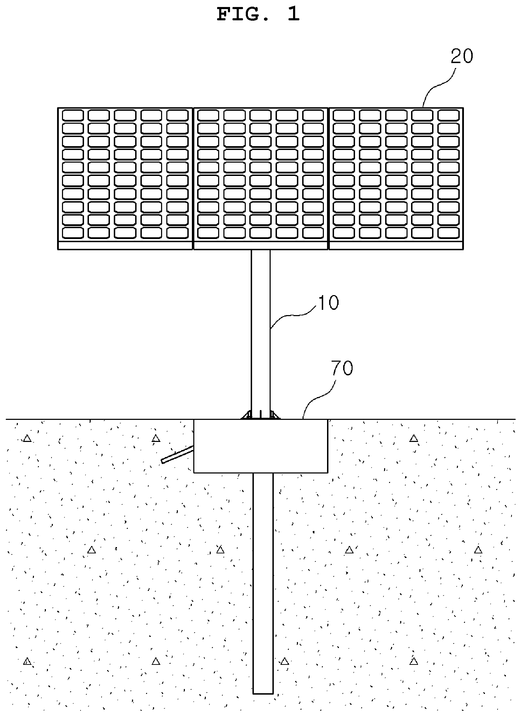

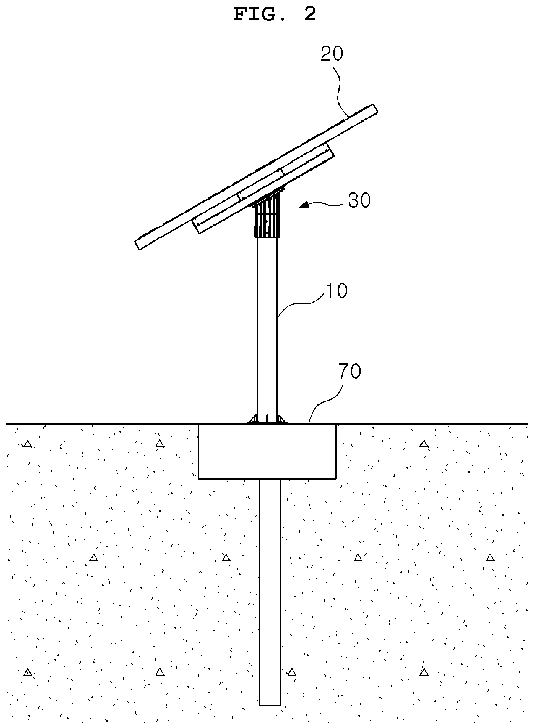

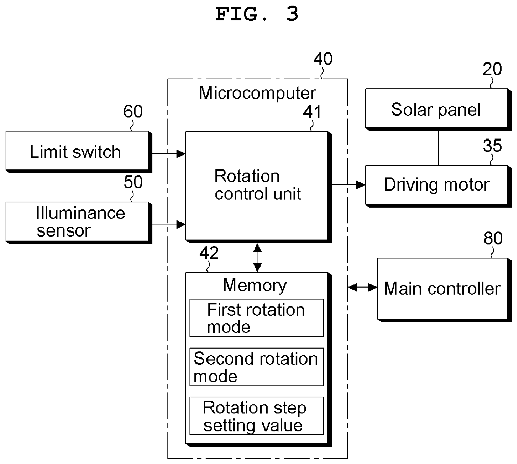

FIG. 1 is a front view showing the appearance of a smart solar power generation system according to a preferred embodiment of the present invention, FIG. 2 is a side view of FIG. 1, and FIG. 3 is a block diagram showing the functional configuration of a smart solar power generation system according to a preferred embodiment of the present invention.

Referring to FIGS. 1 to 3, a smart solar power generation system according to a preferred embodiment of the present invention includes a pole 10 erected and fixed on the ground of a solar power generation site, a solar panel 20 installed on the top of the pole 10, a weight block 70 buried under the ground and connected to the bottom of the pole 10, a rotating device 30 installed under the solar panel 20 to improve efficiency of power generation by gradually rotating the solar panel 20 at a predetermined speed, and a microcomputer 40 for driving and controlling the rotating device.

The pole 10 is erected vertically and installed as the bottom is fixed on the top of the weight block 70 by fastening means such as anchor bolts. Preferably, the pole 10 may be made of a metal tubular body having a round outer circumferential surface like a conventional street lamp post, and may be configured of various other materials in various forms.

When the solar power generation site is a place where trees are planted, such as a mountain, a forestland, a fallow land or the like, a plurality of poles 10 may be arranged to be spaced apart from each other at predetermined intervals so that trees may be placed around the poles when a solar power generation system is constructed. In addition, various places such as a place around a factory, a residential area, a place around a park or the like may be employed as a solar power generation site to which the present invention can be applied, as far as only a small empty space can be secured to bury one or more weight blocks 70 and stand poles 10 on the weight blocks 70.

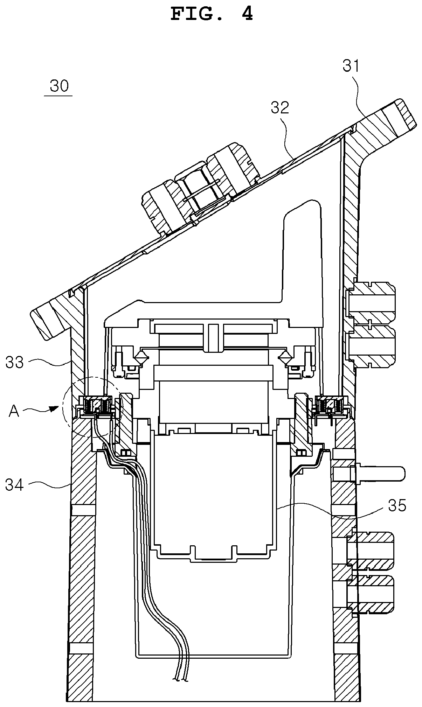

The solar panel 20 is installed on the top of the pole 10 and generates solar electricity. The solar panel 20 is mounted on a support plate (31 in FIG. 4), which is formed on the top of the rotating device to be inclined, and installed to be inclined with respect to the ground. The installation angle of the solar panel 20 is determined by the inclination angle of the support plate 31. A waterproof cover 32 for opening and closing the inner space of the rotating device 30 is detachably installed at the center of the support plate 31.

The rotating device 30 is installed on the top of the pole 10 to provide rotational force to the solar panel 20. As shown in FIG. 4, the rotating device 30 includes a support plate 31 coupled to the rear surface of the solar panel 20 obliquely disposed to be inclined at a predetermined angle, a first tubular body 33 connected on the bottom of the support plate 31, a second tubular body 34 assembled on the bottom of the first tubular body 33, the bottom of which is fixed to the pole 10, a driving motor 35 installed inside the second tubular body 34 to provide rotational force to the first tubular body 33, and a microcomputer 40 for controlling the driving motor 35 to rotate the solar panel 20 at a constant speed in one direction for a preset period of time.

The first tubular body 33 is a pipe-shaped structure with the support plate 31 positioned on the top surface and having a circular circumferential surface. The first tubular body 33 and the support plate 31 may be configured in one piece, or alternatively, the support plate 31 may be integrated on the top of the first tubular body 33 by welding.

The second tubular body 34 is a pipe-shaped structure that is assembled to be positioned on the bottom of the first tubular body 33 and has a circular circumferential surface. A circular slot into which the upper pipe structure of the pole 10 can be inserted may be added to the lower end of the second tubular body 34. As the pole is inserted into the hollow, the second tubular body 34 is fixed on the top of the pole 10.

A predetermined bearing may be interposed between the first tubular body 33 and the second tubular body 34. The bearing includes an upper ring connected to the first tubular body 33 to integrally rotate, and a lower ring assembled under the upper ring to be connected to the second tubular body 34, and a plurality of balls may be interposed between the upper ring and the lower ring. In addition, gear teeth are formed along the periphery of the upper ring or the lower ring, and the driving motor 35 provides rotational force to the first tubular body 33 through a predetermined gear that can be engaged with the gear teeth.

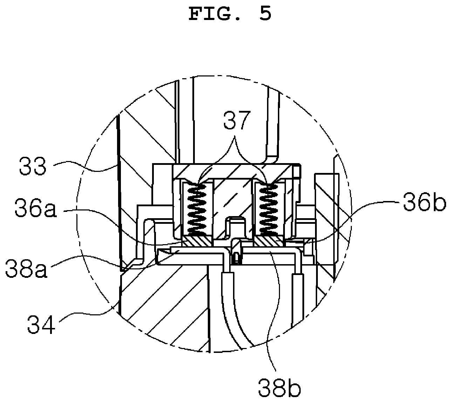

As shown in FIG. 5, first contact points 36a and 36b and second contact points 38a and 38b for transferring power and/or signals are installed at the contact unit between the first tubular body 33 and the second tubular body 34. The first contact points 36a and 36b and the second contact points 38a and 38b are configured of at least one conductor ring, and respectively fixed to the first tubular body 33 and the second tubular body 34 and disposed to face each other in the vertical direction. While the first tubular body 33 rotates with respect to the second tubular body 34, the first contact points 36a and 36b are elastically biased downward by coil springs 37, and continuously maintain a state contacting with the second contact points 38a and 38b. Alternatively, as any one among the first contact points and the second contact points is configured in a roll shape and the other one is configured as a conductor ring on which the roll may roll, the first contact points and the second contact points may be configured to maintain the contact state while relatively rolling when the first tubular body 33 rotates.

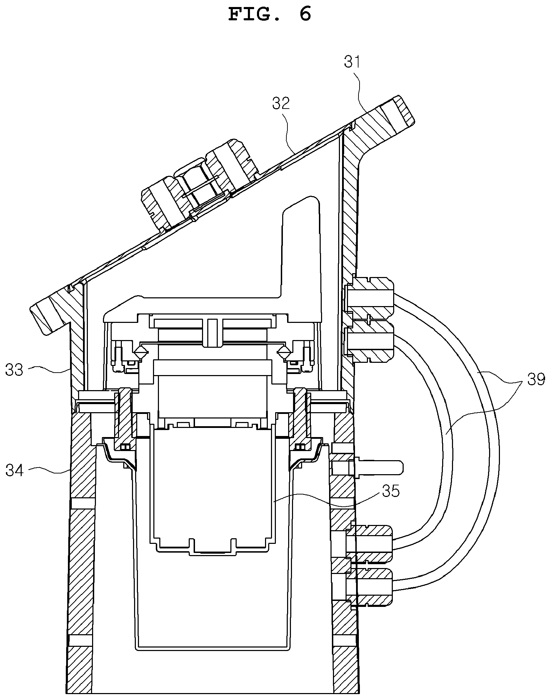

Alternatively, as shown in FIG. 6, an electric wire 39 for transferring power or signals may be connected between the first tubular body 33 and the second tubular body 34.

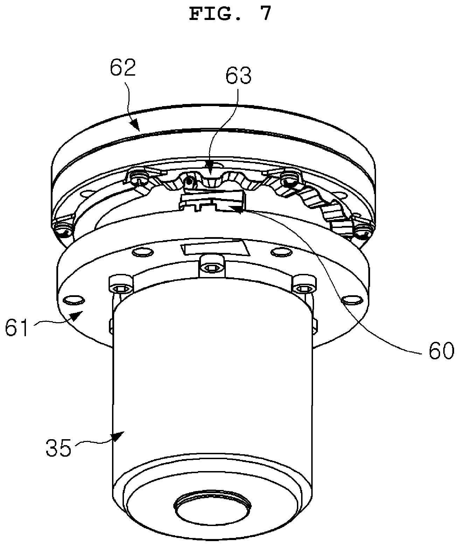

As shown in FIG. 7, the rotating device 30 includes a rotating gear 62 substantially connected to the first tubular body 33, a fixed gear 61 substantially connected to the second tubular body 34, a driving motor 35 installed to be connected to the fixed gear 61 to provide rotational force to the rotating gear 62, a rotation count plate 63 disposed under the rotating gear 62 to integrally rotate with the rotating gear 62, and a limit switch 60 fixed to the fixed gear 61 to continuously contact with the rotation count plate 63 when the rotating gear 62 rotates.

The rotating gear 62 is installed to receive the rotational force from the driving motor 35 to be relatively rotatable with respect to the fixed gear 61. The rotating gear 62 and the fixed gear 61 may be configured of various known gear assemblies.

The driving motor 35 is fixed inside the second tubular body 34 preferably to be erected to have the same axis with the second tubular body 34, and provides rotational force to the rotating gear 62.

The rotation count plate 63 is fixed on the bottom of the rotating gear 62 to rotate together with the rotating gear 62, and an uneven pattern configured of a valley (or groove) and ridge (or protrusion) structure is formed on the bottom at regular intervals in a circumferential direction.

One side of the limit switch 60 is fixed to the fixed gear 61 and the other side is in contact with the rotation count plate 63 to continuously maintain a contact state with the uneven pattern at the same time as the rotation count plate 63 rotates. Accordingly, as the rotation count plate 63 rotates, an on/off signal is repeatedly output from the limit switch 60.

Additionally, a base plate (not shown) having an inclination angle that is set to correspond to the latitude of the installation area may be inserted between the solar panel 20 and the rotating device 30. Owing to the base plate, it is possible to operate by setting the inclination angle of the solar panel 20 to be different for each region of a different latitude.

The microcomputer 40 includes a rotation control unit 41 for determining a daily rotation amount of the solar panel 20 based on an illuminance sensor 50, a seasonal rotation set time, and GPS time information provided by a satellite communication module, and performing rotation control by applying the daily rotation amount to on/off control of the driving motor 35. The microcomputer 40 may be embedded in the rotating device 30 or the pole 10, or may be embedded in a separate enclosure.

The microcomputer 40 recognizes that the day has dawned when the illuminance value of sunlight output from the illuminance sensor 50 exceeds a predetermined value, and operates the driving motor 35 to slowly rotate the solar panel 20 in one direction in seconds for a preset rotation step and/or time. It is preferable that the path through which the solar panel 20 rotates is set to sufficiently expose the solar panel 20 to the sun as much as possible in consideration of the amount of sunlight of the sun. When the solar panel 20 rotates at a predetermined speed for a set period of time, the amount of solar power generation can be increased compared with a case of placing the solar panel 20 in a stationary state to face one side, although a solar tracking device of a complicated structure is not separately used.

Specifically, the rotation control unit 41 of the microcomputer 40 performs a first rotation mode of generating solar electricity while rotating the solar panel 20 at a predetermined speed immediately before or after sunrise. In addition, during sunset, immediately after sunset, or immediately before sunrise, the microcomputer 40 performs a second rotation mode of moving the solar panel 20 to the rotation start position of the next day by rotating the solar panel 20 so that the top surface of the solar panel 20 faces east using residual electricity output from the solar panel 20 at sunset or sunrise. To this end, data on the first rotation mode and the second rotation mode are stored in the memory 42 of the microcomputer 40.

At sunset or sunrise, the microcomputer 40 performs the second rotation mode of moving the solar panel 20 to the rotation start position of the next day by rotating the solar panel 20 so that the top surface of the solar panel 20 faces east using residual electricity output from the solar panel 20. Here, the 'residual electricity' refers to residual electricity produced by the solar panel 20 but not transmitted to a power company since the electricity does not reach a predetermined power level. The residual electricity is generated by a small amount of sunlight directly or indirectly received by the solar panel 20 at sunset or sunrise. The 'rotation start position' refers to a position at which rotation of the solar panel 20 begins again the next day after sunset.

In the present invention, control of rotating and moving the rotating device 30 to the rotation start position where the first rotation mode begins is performed using the small amount of residual electricity. For example, when the solar panel 20 ends generation pf power at a predetermined position facing west immediately after sunset (when transmission of power to the power company is stopped), the microcomputer 40 performs control of driving the rotating device 30 to slowly rotate the solar panel 20 in the east direction to be placed at the rotation start position using the residual electricity output from the solar panel 20.

When the first contact points 36a and 36b and the second contact points 38a and 38b are provided to transfer power and/or signals between the first tubular body 33 and the second tubular body 34, it is preferable that the operation of rotating the solar panel 20 in the east direction is the same direction as the rotation direction of the solar panel 20 in the first rotation mode. On the other hand, when the electric wire 39 for transferring power and/or signals is connected between the first tubular body 33 and the second tubular body 34, the operation of rotating the solar panel 20 in the east direction is set in a direction opposite to the rotation direction of the solar panel 20 in the first rotation mode to prevent the electric wire 39 from being twisted.

The microcomputer 40 drives and detects rotation of the solar panel 20 in steps from the operation of the limit switch 60 that is turned on/off by the change in the uneven pattern according to rotation of the rotation count plate 63. Here, a first step of rotation of the solar panel 20 may be defined as one cycle of the rotation count plate 63, i.e., by counting contact of the limit switch 60 with the next groove after contacting any one groove included in the uneven pattern.

That is, the microcomputer 40 may control the daily rotation amount (rotation angle) of the solar panel 20 to be different by setting the number of rotation steps to be different for each season. When the amount of sunlight of each season is considered, it is desirable to perform the rotation control by setting the number of rotation steps to be the largest in summer (set to rotate the most) and the smallest in winter (set to rotate the least) among four seasons. Specifically, the microcomputer 40 performs the rotation control by setting the number of rotation steps of the rotation count plate 63 to 1 to 11 steps in spring/fall, 0 to 12 steps in summer, and 2 to 10 steps in winter. To this end, data on a rotation step setting value is stored in the memory 42 of the microcomputer 40.

The main controller 80 communicates with the microcomputer 40 in a wired and wireless manner to control all solar panels 20 to rotate in substantially the same pattern by managing solar panels 20 and rotating devices 30 different from each other in an integrated manner.

Additionally, the main controller 80 detects wind direction when it rains and controls the solar panel 20 to rotate in a direction facing raindrops. That is, as the surface of the solar panel 20 is directly exposed to the raindrops, fine dust or foreign materials accumulated on the surface of the solar panel 20 can be effectively removed.

The weight block 70 is made of a concrete block formed by inserting reinforcing bars of a predetermined length and pouring concrete to support the pole 10. When the construction is completed, the weight block 70 is buried under the soil ground of the solar power generation site. The weight block 70 is provided to one-to-one correspond to a plurality of poles constituting the solar power generation system, and is connected to the bottom of the pole 10.

A pile stuck in the soil to fix the weight block 70 is connected to the bottom of the weight block 70 to prevent the pole 10 from being pulled out by strong wind or the like. In addition, an anchor bolt for fixing the pole 10 is provided on the top surface of the weight block 70.

Although a solar tracking device of a complicated structure is not separately used, the present invention having the configuration as described above may increase the amount of solar power generation compared with a case of placing the solar panel 20 in a stationary state to face one side, by slowly rotating the solar panel 20 at a predetermined speed using the driving motor 35 while generating solar electricity.

In addition, as the solar panel 20 is rotated toward the east and moved to the rotation start position at sunset or sunrise using residual electricity output from the solar panel 20 so that solar power generation is performed at a correct position immediately after sunrise the next day, there is a remarkable effect of improving the efficiency of power generation.

On the other hand, in the present invention, since trees around the pole 10 supporting the solar panel 20 can be maintained as they are, an eco-friendly facility of solar power generation can be constructed while minimizing damage to the nature. Since the trees around the pole 10 may also function as a windbreak forest, the solar panel 20 can be installed more stably.

When the system is constructed, the construction is easily completed by digging a predetermined hole at each point where the pole 10 will be installed, burying and fixing the weight block 70, and placing and fixing the bottom of the pole 10 on the top of the weight block 70 using anchor bolts.

During the operation of the smart solar power generation system, as the solar panel 20 rotates in one direction at a preset time and speed by the rotating device 30, the amount of solar power generation can be increased.

The rotating device 30 rotates the solar panel 20 fixed to the support plate 31 of the first tubular body 33 by transferring rotational force of the driving motor 35 to the rotating gear 62 and rotating the first tubular body 33. The first tubular body 33 rotates with respect to the second tubular body 34 fixed to the pole while stably supporting the solar panel 20. As a predetermined bearing is interposed between the first tubular body 33 and the second tubular body 34, structurally stable and smooth rotation can be achieved.

As the rotation count plate 63 is fixed on the bottom of the rotating gear 62 and integrally rotates with the rotating gear 62 and the limit switch 60 is continuously in contact with the bottom of the rotation count plate 63 and detects the uneven pattern of the rotation count plate 63, the amount of rotation may be detected in steps. The microcomputer 40 drives rotation of the solar panel 20 in steps from the operation of the limit switch 60, which is turned on/off by a change in the uneven pattern according to rotation of the rotation count plate 63, and also detects whether the solar panel 20 rotates in seconds without an error, and then reflects this in the control operation.

As described above, the smart solar power generation system according to the present invention may improve efficiency of solar power generation by setting the solar panel to the rotation start point in advance using residual electricity generated by the solar panel at sunset or sunrise.

In addition, as the construction is simple, the range of choices for the solar power generation site is wide, and as the weight block 70 for fixing the pole is installed to be locally buried for each pole, an eco-friendly facility of solar power generation can be constructed while minimizing environmental destruction. Particularly, when the solar power generation site is a mountain or a forestland, damage to the nature can be minimized as the trees around a pole that supports the solar panel can be maintained as they are.

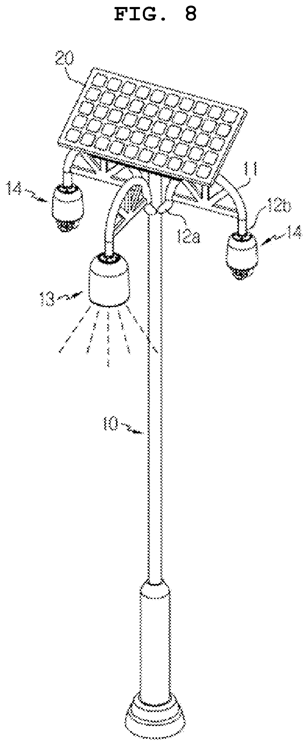

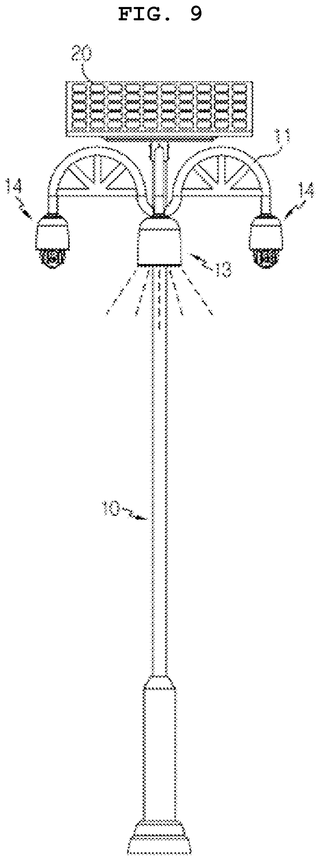

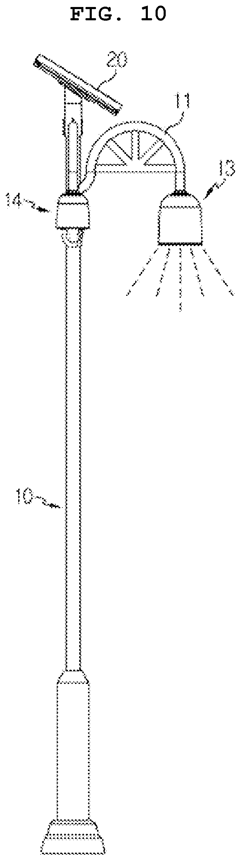

FIG. 8 is a perspective view showing the appearance of a smart solar power generation system according to another embodiment of the present invention, FIG. 9 is a front view of FIG. 8, and FIG. 10 is a side view of FIG. 8.

Referring to FIGS. 8 to 10, the smart solar power generation system according to a preferred embodiment of the present invention includes a pole 10 erected on the ground, a plurality of support members 11 disposed on the top of the pole 10, and an elevating lighting module 13 and an elevating camera module 14, which are highly-installed devices installed on the support members 11.

The pole 10 is vertically erected from the ground, and the bottom is fixed to the ground by fastening means such as anchor bolts or the like. Preferably, the pole 10 may be made of a metal tubular body having a round outer circumferential surface like a conventional street lamp post, and may be configured of various other materials in various forms.

The plurality of support members 11 is positioned on the top of the pole 10 and disposed in a form branched in several directions toward the front and lateral sides around the pole 10. One end 12a of each of the plurality of support members 11 is mounted on the pole 10 by welding or bolting and extended in the form of an arch curved toward the top, and the other end 12b is disposed toward the ground. According to the structure like this, since the other end 12b of each support member 11 is connected to the top of the elevating lighting module 13 or the top of the elevating camera module 14, each of the modules 13 and 14 may be stably supported by holding the modules 13 and 14 from the top, and the support members 11 may be prevented from being an obstacle around the modules 13 and 14.

Although it preferable that the elevating lighting module 13 and the elevating camera module 14 are employed as the highly-installed devices, the present invention is not limited to this example, and other various devices may be applied.

The elevating lighting module 13 is installed at an end of at least any one among the plurality of support members 11. The elevating lighting module 13 includes a first body 13b having a drum for winding a first traveling cable 13c thereon and a driving motor for providing rotational force to the drum, and a lighting unit 13a connected to hang on one end of the first traveling cable 13c, coupled to the bottom of the first body 13b when ascending is completed, and separated from the first body 13b when descending. The elevating lighting unit 13a is preferably configured of a plurality of power LEDs and connected to a communication module supporting a wireless communication protocol such as Wi-Fi, LTE, Bluetooth or the like.

The elevating camera module 14 is installed at an end of at least another one among the plurality of support members 11. The elevating camera module 14 includes a second body 14b having a drum for winding a second traveling cable 14c thereon and a driving motor for providing rotational force to the drum, and a CCTV camera 14a connected to hang on one end of the second traveling cable 14c, coupled to the bottom of the second body 14b when ascending is completed, and separated from the second body 14b when descending. The CCTV camera 14a is preferably connected to a communication module supporting a wireless communication protocol such as Wi-Fi, LTE, Bluetooth or the like.

Preferably, the support members 11 are arranged in three directions at regular intervals therebetween, and the elevating lighting module 13 is installed on the support member 11 located in the middle among the three support members 11. In addition, one elevating camera module 14 is installed on each of the remaining support members 11.

The first traveling cable 13c of the elevating lighting module 13 and the second traveling cable 14c of the elevating camera module 14 may be formed of a wire rope or a power cable.

The technique disclosed in Korean Patent Application No. 10-2013-0070072 previously filed by the present applicant may be employed as a technical configuration of the drum and the driving motor for rolling up or rolling down the first traveling cable 13c and the second traveling cable 14c respectively embedded in the elevating lighting module 13 and the elevating camera module 14.

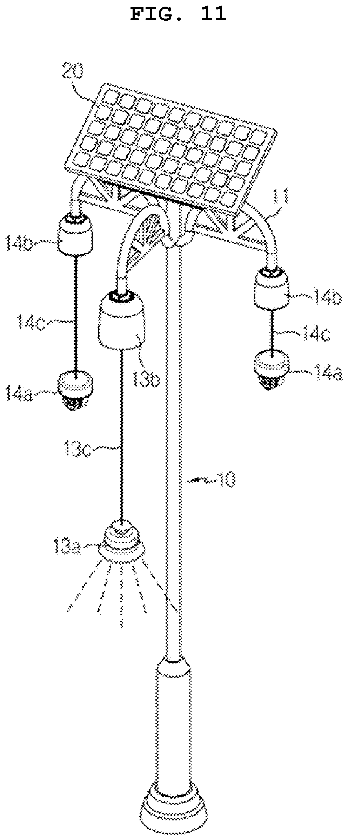

As shown in FIG. 11, the lighting unit 13a of the elevating lighting module 13 and the CCTV camera 14a of the elevating camera module 14 may be controlled to be individually raised or lowered. That is, when maintenance or cleaning of a specific lighting unit 13a or CCTV camera 14a is required, a person in charge needs to selectively lower only a corresponding lighting unit 13a or CCTV camera 14a to perform the work. Alternatively, the lighting unit 13a and the CCTV camera 14a may be controlled to be collectively raised or lowered. In addition, when it is needed, all the lighting units 13a and CCTV cameras 14a may be controlled to be collectively raised or lowered at the same time.

The operation of raising and lowering the elevating lighting module 13 and the elevating camera module 14 may be individually performed through wired or wireless communication. When the wireless communication is used, Wi-Fi or LTE may be used as a wireless communication specification.

The solar panel 20 is installed on the top of the pole 10 and supplies solar power to the elevating lighting module 13 and the elevating camera module 14. The elevating lighting module 13 and the elevating camera module 14 may be configured to basically receive power from a commercial power grid and receive emergency power from the solar panel 20 in the event of power failure.

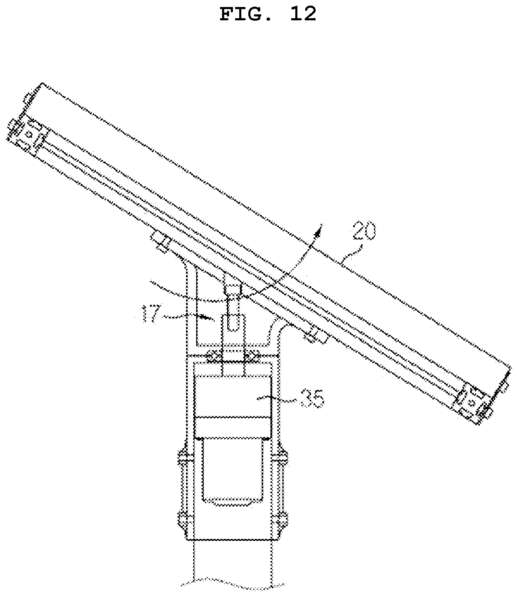

As shown in FIG. 12, the solar panel 20 is obliquely disposed at a predetermined angle.

The rotation shaft 17 of the driving motor 35 is arranged to be perpendicular to the ground and connected to the rear surface of the solar panel 20, and the solar panel 20 is disposed obliquely with respect to the rotation shaft 17 of the driving motor 35.

The microcomputer 40 controls the operating time and speed of the driving motor 35 in connection with the illuminance sensor 50 or the like. The microcomputer 40 recognizes whether it is dark or bright from an output value (illuminance value) or a set time of the illuminance sensor 50. For example, the microcomputer 40 recognizes that the day has dawned when the illuminance value of the sun exceeds a predetermined value, and operates the driving motor 35 to slowly rotate the solar panel 20 in one direction for a preset time. It is preferable that the path through which the solar panel 20 rotates is set to sufficiently expose the solar panel 20 to the sun as much as possible in consideration of the amount of sunlight of the sun. When the solar panel 20 rotates at a predetermined speed for a set period of time, the amount of solar power generation can be increased compared with a case of placing the solar panel 20 in a stationary state to face one side, although a solar tracking device of a complicated structure is not separately used.

In the smart solar power generation system according to a preferred embodiment of the present invention, when the lighting unit 13a and the CCTV camera 14a are raised and combined with the bodies 13b and 14b located on the top of the pole 10 by rolling-up of the first traveling cable 13c and the second traveling cable 14c according to forward rotational drive of the drums embedded in the bodies 13b and 14b respectively, power may be supplied to the lighting unit 13a and the CCTV camera 14a as the upper and lower contact points embedded in the bodies 13b and 14b contact each other. Here, the upper contact points are fixed to the main bodies 13b and 14b, and the lower contact are fixed on the top of the lighting unit 13a and the CCTV camera 14a corresponding to the elevating body, respectively.

When it is desired to perform regular inspection, maintenance, lens/glass cleaning or the like for the lighting unit 13a and the CCTV camera 14a, the lighting unit 13a and the CCTV camera 14a may be lowered to the ground by unrolling the first traveling cable 13c and the second traveling cable 14c by performing reverse rotational drive on the drums embedded in the main bodies.

When maintenance or cleaning of the lighting unit 13a and the CCTV camera 14a is required, a person in charge may individually lower the lighting unit 13a and the CCTV camera 14a and perform the work. As needed, the person in charge may perform an operation of simultaneously raising and lowering all the lighting units 13a and CCTV cameras 14a.

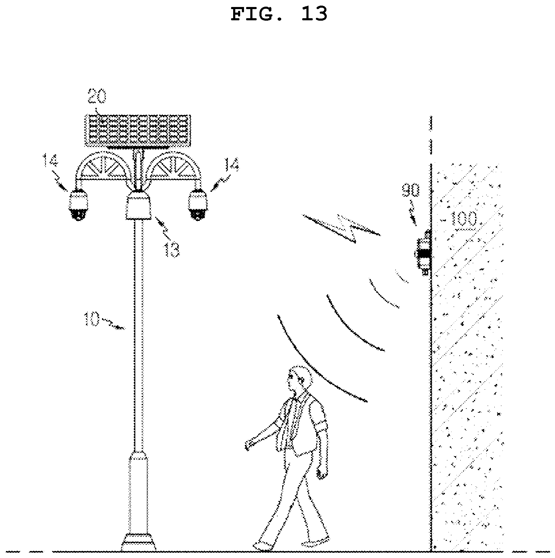

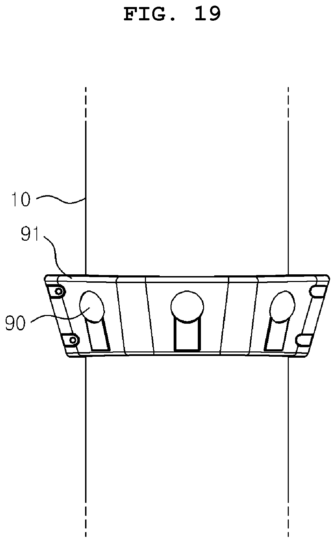

The lighting unit 13a and the CCTV camera 14a operate in a state of being coupled to the bodies 13b and 14b after ascending is completed. As shown in FIG. 13, a detection sensor 90 for the operation of the lighting unit 13a is installed on the outer wall 100 of a building placed at a location spaced apart from the pole 10. When approach of a pedestrian is detected by the detection sensor 90, a detection signal is wirelessly transmitted to a lighting control unit of the elevating lighting module 13, and the lighting unit 13a is controlled to be automatically turned on. Since the detection sensor 90 is disposed at a place spaced apart from the pole 10 in this way, it is possible to detect the approach without an error although the pedestrian is on any side of the pole 10. Alternatively, the detection sensor 90 is a predetermined ring-type mount detection sensor 90 that is fixed around the outer surface of the pole 10 as shown in FIG. 19, and when a pedestrian is detected, the detection sensor 90 wirelessly transmits a detection signal corresponding thereto to the elevating lighting module 13. At this point, Wi-Fi, LTE, Bluetooth or the like may be used as a wireless communication specification.

A lighting control unit (not shown) embedded in the elevating lighting module 13 performs control of selectively turning on the lighting unit 13a when a detection signal is output from the detection sensor 90. Preferably, the lighting control unit of the elevating lighting module 13 may perform automatic on/off control of turning on the lighting unit 13a when approach or movement of a pedestrian is detected and automatically turning it off when a predetermined time is elapsed. At this point, the on/off time may be received from a person in charge through wired or wireless communication.

Additionally, the lighting control unit may automatically output a warning sound, a warning message, or music when approach of a pedestrian is detected.

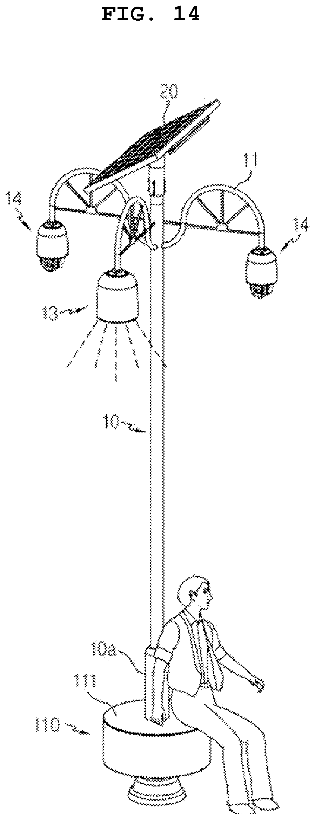

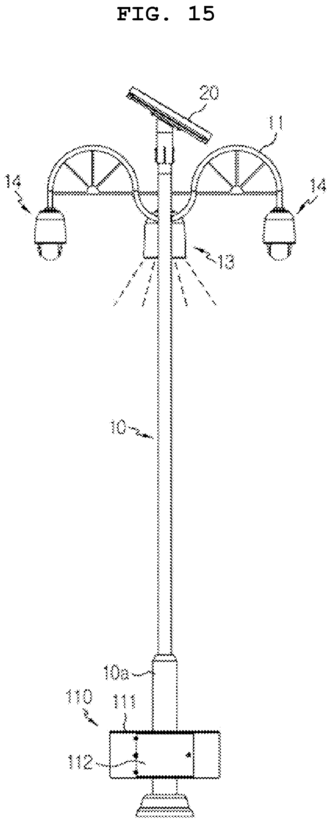

FIG. 14 is a perspective view showing the appearance of a smart solar power generation system according to still another embodiment of the present invention, and FIG. 15 is a front view of FIG. 14.

Referring to FIGS. 14 and 15, the smart solar power generation system includes a pole 10 erected on the ground, a plurality of support members 11 disposed on the top of the pole 10, an elevating lighting module 13 and an elevating camera module 14 installed on the support members 11, a solar panel 20 installed on the top of the pole 10 to supply emergency power to the elevating lighting module 13 and the elevating camera module 14, and a circular seat member 110 installed at a predetermined height from the bottom of the pole 10 to provide a seat surface 111. In the drawings, since the reference numerals the same as those in the embodiment described above refer to the same components, detailed description thereof will be omitted.

The circular seat member 110 is a cylindrical structure that is disposed around the pole 10 in a circular shape at a predetermined height from the bottom of a lower pipe 10a of the pole 10 and has a diameter larger than the height, and it provides a circular seat surface 111 on which several users may sit at the same time.

On one side of the circular seat member 110 or on one side of the lower pipe 10a, a detection sensor (not shown) for detecting approach or seating of a user may be mounted. Like the embodiment described above, the detection sensor may be installed on the outer wall 100 of a building in the neighborhood.

An inner space is provided in the circular seat member 110, and the inner space is opened and closed by a door 112 hinge-coupled to the outer surface of a round shape. In the inner space of the circular seat member 110, equipment vulnerable to moisture, such as a predetermined battery for providing emergency power, a controller or the like, may be accommodated. Accordingly, the circular seat member 110 is used as a means for preventing electronic devices from being flooded, in addition to seating. In order to provide both the functions of seating and preventing flooding, the circular seat member 110 is fixed to the lower pipe 10a of a height spaced apart from the ground by several to tens of centimeters (cm).

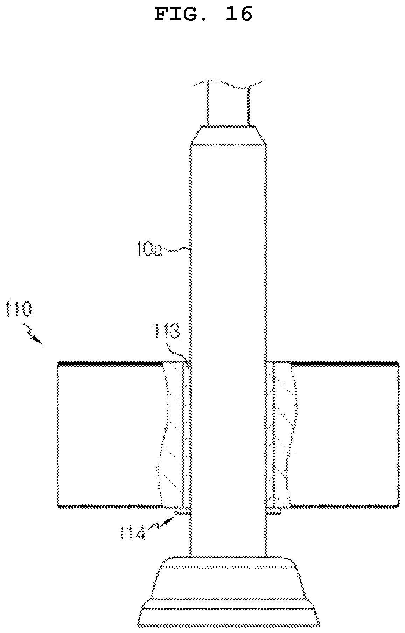

As shown in FIG. 16, the circular seat member 110 is inserted outside a fixing pipe 113 fastened to surround the outer circumferential surface of the lower pipe 10a and then fixed by bolting or welding. At this point, it is preferable to insert and fasten the circular seat member 110 from the top to the bottom of the lower pipe 10a that is separated from the pole 10. It is preferable that a latching protrusion 114 formed to have a relatively large outer diameter compared with those of other portions is provided on the bottom of the fixing pipe 113 to support the bottom of the circular seat member 110. Alternatively, the fixing pipe 113 may be configured in a tapered shape to gradually increase the diameter toward the bottom so that the circular seat member 110 may be fixed so as not to go down from a predetermined position any more.

The lighting control unit of the elevating lighting module 13 performs control of automatically turning on the lighting unit 13a when approach or seating of a user is detected by the detection sensor 90. According to an application example of the present invention, it may be configured such that the lighting control unit of the elevating lighting module 13 and the lighting control unit installed in a neighboring pole 10 communicate with each other to track movement (path) of a pedestrian and sequentially turn on the adjacent lighting units 13a.

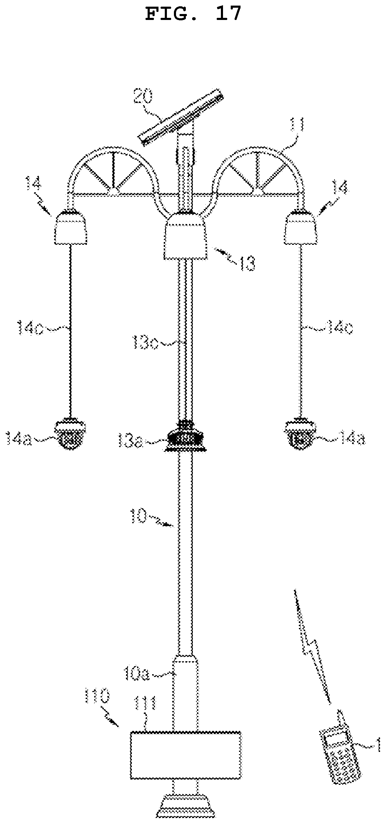

FIG. 17 is a perspective view showing a state of lowering the lighting unit 13a and the CCTV camera 14a hanging on the traveling cables 13c and 14c in FIG. 15, respectively. As described in the above embodiment, when maintenance or cleaning of the lighting unit 13a and the CCTV camera 14a is required, a person in charge may individually lower the lighting unit 13a and the CCTV camera 14a and perform the work. As needed, the person in charge may perform the work in a manner of simultaneously raising and lowering the lighting units 13a and the CCTV cameras 14a as a group.

The operation of raising and lowering the CCTV camera 14a and the lighting unit 13a may be performed by a predetermined wireless remote controller 1.

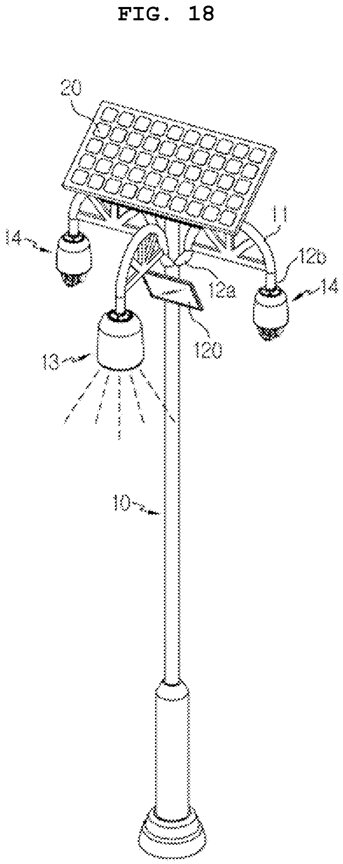

Additionally, a CCTV monitor (120 in FIG. 18) showing images captured by the CCTV camera 14a may be installed on the pole 10 or the support member 11. It is preferable that the CCTV monitor 120 is configured of a liquid crystal display, the housing of which is waterproofed.

As described above, as the smart solar power generation system according to the present invention may individually or collectively raise or lower the elevating lighting module 13 and the elevating camera module 14 using traveling cables 13c and 14c, works such as cleaning or equipment maintenance can be conveniently performed.

In addition, as the installation structure of the detection sensor 90 for detecting approach of a pedestrian is improved, a pedestrian detection blind spot does not occur unlike existing facilities, and efficiency of solar power generation can be improved, and furthermore, there is a remarkable effect of providing convenience of user's seating and prevention of flooding by the circular seat member 110.

Although the present invention has been described above by the limited embodiments and drawings, it goes without saying that the present invention is not limited thereto, and various changes and modifications can be made by those skilled in the art within the equivalent scope of the spirit of the present invention and the claims described below.

### INDUSTRIAL APPLICABILITY

When the present invention is applied, efficiency of solar power generation can be improved by setting the solar panel to the rotation start point in advance using residual electricity generated by the solar panel at sunset or sunrise.

In addition, since it is possible to supply power to the elevating lighting module and the elevating camera module using the solar panel, and individually or collectively raise or lower each of the elevating lighting module and the elevating camera module using a traveling cable, works such as cleaning or equipment maintenance can be conveniently performed, and as the installation structure of the detection sensor for detecting approach of a pedestrian is improved, a pedestrian detection blind spot does not occur unlike existing facilities.

## Claims

1. A smart solar power generation system comprising:
a pole fixed to be erected on a ground;
a solar panel disposed obliquely on a top of the pole to generate solar electricity;
a rotating device installed under the solar panel to provide rotational force to the solar panel; and
a microcomputer for driving and controlling the rotating device, and performing a first rotation mode of generating solar electricity while rotating the solar panel at a predetermined speed after sunrise, and a second rotation mode of moving the solar panel to a rotation start position by rotating the solar panel so that a top surface of the solar panel faces east using residual electricity output from the solar panel at sunset or sunrise.

2. The system according to claim 1, wherein the rotating device includes:
a first tubular body connected on a bottom of the solar panel;
a second tubular body fixed to a top of the pole;
a rotating gear connected to the first tubular body;
a fixed gear connected to the second tubular body;
a driving motor installed on the fixed gear to provide rotational force to the rotating gear;
a rotation count plate disposed under the rotating gear to have an uneven pattern formed in a circumferential direction at regular intervals; and
a limit switch fixed to the fixed gear to maintain contact with the rotation count plate when the rotating gear rotates.

3. The system according to claim 2, wherein a first contact point and a second contact point continuously contacting with each other when the rotating gear rotates to transfer power or signals are installed at a contact unit between the first tubular body and the second tubular body, and the microcomputer rotates the solar panel in only one direction when the first rotation mode and the second rotation mode are performed.

4. The system according to claim 2, wherein an electric wire for transferring power or signals is connected between the first tubular body and the second tubular body.

5. The system according to claim 1, wherein the microcomputer drives and detects rotation of the solar panel in steps from an operation of a limit switch turned on/off according to an uneven pattern of a rotation count plate.

6. The system according to claim 5, wherein the microcomputer sets the number of rotation steps to be different for each season, and performs rotation control by setting the number of rotation steps to be largest in summer and smallest in winter among four seasons.

7. The system according to claim 1, wherein a base plate having a predetermined angle according to a latitude of an installation area is inserted between the solar panel and the rotating device to adjust an inclination angle.

8. The system according to claim 1, wherein the microcomputer performs rotation control through an illuminance sensor, a seasonal rotation set time, and a satellite communication module.

9. The system according to claim 1, further comprising a main controller communicating with the microcomputer in a wired and wireless manner to manage different solar panels and rotating devices in an integrated manner and control all solar panels to rotate equally.

10. The system according to claim 9, wherein the main controller performs control of cleaning the solar panel by detecting wind direction when it rains and rotating the solar panel in a direction facing raindrops.

11. The system according to claim 1, further comprising:
a plurality of support members positioned under the solar panel, connected to the pole, and branched in several directions;
a plurality of bodies installed to correspond to the plurality of support members, each having a drum for winding a traveling cable thereon and a driving motor for providing rotational force to the drum; and
a plurality of highly-installed devices respectively corresponding to the plurality of bodies and installed to be raised or lowered while hanging on the traveling cables, wherein the plurality of highly-installed devices is controlled to be raised or lowered individually or as a group.

12. The system according to claim 11, wherein the plurality of highly-installed devices includes:
an elevating lighting module installed on at least any one among the plurality of support members and provided with a first body having a drum for winding a first traveling cable thereon and a driving motor for providing rotational force to the drum, and a lighting unit installed to provide lighting around the pole while hanging on the first traveling cable to be raised or lowered; and
an elevating camera module installed on at least another one among the plurality of support members and provided with a second body having a drum for winding a second traveling cable thereon and a driving motor for providing rotational force to the drum, and a CCTV camera installed to be raised or lowered while hanging on the second traveling cable.

13. The system according to claim 12, further comprising:
a detection sensor installed on an outer surface of the pole or to be spaced apart from the pole by a predetermined distance to detect approach of a pedestrian; and
a lighting control unit for selectively turning on the lighting unit when a detection signal is output from the detection sensor.

14. The system according to claim 13, further comprising a circular seat member disposed around the pole in a circular shape at a predetermined height from a bottom of the pole to provide a seat surface for users to sit on.

15. The system according to claim 14, wherein the lighting control unit automatically turns on the lighting unit when user's seating on the circular seat member is detected.

16. The system according to claim 14, wherein the lighting control unit and lighting control units installed in neighboring poles communicate with each other so that adjacent lighting units are sequentially turned on.

17. The system according to claim 13, wherein the lighting control unit automatically outputs a warning sound, a warning message, or music when approach of a pedestrian is detected.

18. The system according to claim 13, wherein when approach of a pedestrian is detected, the lighting control unit communicates with lighting control units installed in neighboring poles to track movement of the pedestrian and control operation of the CCTV camera or the lighting unit.

19. The system according to claim 12, wherein the elevating camera module and the elevating lighting module receive emergency power from the solar panel.

20. The system according to claim 12, wherein the support members are arranged in three directions at regular intervals therebetween, and the elevating lighting module is installed on a support member located in the middle among the three support members, and one elevating camera module is installed on each of remaining support members.

21. The system according to claim 12, further comprising a CCTV monitor installed on the pole or the support member to show images captured by the CCTV camera.
